# EUROPEAN PATENT SPECIFICATION

(11) **EP 3 081 530 B1**
(45) Date of publication and mention of the grant of the patent: **17.02.2021**
(21) Application number: 13900708.2
(22) Date of filing: 31.12.2013
(51) Int. Cl.: C01B 32/184, C01B 32/192, C01B 32/23

(54) **ANTHRACITE-BASED METHOD FOR PREPARATION OF GRAPHENE AND GRAPHENE OXIDE**
AUF ANTHRACIT BASIERENDES VERFAHREN ZUR HERSTELLUNG VON GRAPHEN UND GRAPHENOXID
PROCÉDÉ À BASE D'ANTHRACITE POUR LA PRÉPARATION DE GRAPHÈNE ET D'OXYDE DE GRAPHÈNE

(43) Date of publication of application: 19.10.2016
(60) Divisional application: 17205789.5
(73) Proprietor: Shenzhen Cantonnet Energy Services Co. , Ltd., Shenzhen, Guangdong 518000 (CN)
(72) Inventor: ZHANG, Linde, Shenzhen Guangdong 518000 (CN); ZHANG, Mingdong, Shenzhen Guangdong 518000 (CN)
(74) Representative: Berkkam, Ayfer
(86) International application number: PCT/CN2013/091258
(87) International publication number: WO 2015/100682

(56) References cited:
- WO-A2-2010/079291
- WO-A2-2010/079291
- CN-A- 102 602 924
- CN-A- 102 976 315
- CN-A- 103 833 028
- MUHAMMAD HAFIZ SYED ET AL: "A practical carbon dioxide gas sensor using room-temperature hydrogen plasma reduced graphene oxide", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, vol. 193, 12 December 2013 (2013-12-12), pages 692-700, XP028818856, ISSN: 0925-4005, DOI: 10.1016/J.SNB.2013.12.017
- HUA FENG ET AL: "Fabrication of Spirocyclic Phosphazene Epoxy-Based Nanocomposites with Graphene via Exfoliation of Graphite Platelets and Thermal Curing for Enhancement of Mechanical and Conductive Properties", INDUSTRIAL & ENGINEERING CHEMISTRY RESEARCH., vol. 52, no. 30, 31 July 2013 (2013-07-31) , pages 10160-10171, XP055314838, US ISSN: 0888-5885, DOI: 10.1021/ie400483x
- QUAN ZHOU ET AL: "Graphene Sheets from Graphitized Anthracite Coal: Preparation, Decoration, and Application", ENERGY & FUELS., vol. 26, no. 8, 16 August 2012 (2012-08-16), pages 5186-5192, XP055285581, WASHINGTON, DC, US. ISSN: 0887-0624, DOI: 10.1021/ef300919d
- DATABASE WPI Week 201450 Thomson Scientific, London, GB; AN 2014-P27941 XP002763669, & CN 103 833 028 A (SHENZHEN YUEWANG ENERGY SAVING TECH SERV) 4 June 2014 (2014-06-04)

## Description

### Technical field

The present invention relates to a preparation method of graphene and graphene oxide, specifically referring to a preparation method of graphene and graphene oxide based on anthracite.

### Background Technology

Since Andre Geim and Konstanin Novoselof from University of Manchester in UK successfully stripped pyrolytic graphite out and observed graphene in 2004 (Novoselov, K.S.; Geim, A.K.; Morozov, S.V; Jiang, D.; Zhang, Y; Dubonos, S.V; Grigorieva, I.V; Firsov, A.A.Science 2004, 306, 666-9), new carbon materials has been remaining a hot topic in relevant areas. The success of stripping graphene out breaks the prediction about thermal instability of two-dimensional crystal theoretically, and brings about possibilities for more investigations and explorations in new fields.

Perfect graphene is supposed to own ideal two-dimensional structure, which consists of hexagonal lattice. Every single carbon atom is combined with other three carbon atoms by σ bond in the direction of lattice plane, and non-bonding electrons serves as π electrons, forming π orbit system vertical to the lattice plane. As the π electron could move randomly in the plane-graphene can sustain electric current densities six orders higher than copper. Meanwhile, Graphene shows record thermal conductivity. The thermal conductivity of pure graphene could reach 2000-4000W ▪ m⁻¹ ▪ K⁻¹, and also has excellent strength and large surface area. Besides, the special structure of graphene provides unique energy band structure and enables it with half integer quantum hall effect and perfect tunneling effect, as well as electrical conductivity that would never fade away. The special characteristics mentioned above guarantee graphene a promising prospect of application in fields of materials and electronic circuits.

There're two traditional ways to synthesize graphene, which are physical method and chemical method respectively. Properties of graphene obtained through the two methods are different from each other. Physical methods include mechanical stripping, electric arc discharge, ultrasound dispersion etc. Graphene layers obtained through physical methods are comparatively intact, but there're problems like low productivity, uncertainty of quality, command for special equipment and high cost. While chemical methods include bottom up organic synthesis, oxidation-reduction process, solvothermal synthesis and chemical vapor deposition. Equipment and raw materials are strictly required for organic synthesis method, so it's difficult to achieve mass production in this way. Production quality isn't stable for solvothermal method, thus the average quality is poor. Chemical vapor deposition method costs too high and cannot achieve scale production. Among all those methods, only oxidation-reduction process can work without special equipment, and quality of graphene obtained through this method is stable. Thus, it's the most suitable way for industrialized production.

During the oxidation-reduction process for graphene preparation, intermediates of graphene oxide has been involved. The intermediates are supposed to go through intercalation by strong acid. Then the intercalated graphene goes through deep oxidation by strong oxidant to form large quantity of carboxyl and carbonyl groups around the graphene layers, and then form large quantity of hydroxyl and epoxy groups within the graphene layers. After ultrasound exfoliation, we can obtain graphene oxide with a certain degree of dispersion. A large amount of strong acid and strong oxidant is used in this step, meanwhile the heat release is quite serious. As a result, equipments for graphene preparation must meet strict standards, and it's difficult to achieve mass production. Besides, during the oxidation-reduction process for graphene preparation, high quality graphite is required, and we usually use crystalline flake graphite of higher price and purity as main material, which increases the cost of graphene production further. Production cost for high quality single-layer graphene is especially high. Therefore, if we could develop raw materials at low cost for graphene or graphene oxide, and design a reasonable manufacturing technique based on the material, we would be able to lower the production difficulty and cost effectively and make it possible to put graphene into mass production.

Coal serves as a traditional material in chemical engineering and energy fields. Chemical composition of coal can be regarded as macromolecule polymerized by large amounts of condensed rings with different condensation degrees and different groups. There're a few aliphatic rings and heterocyclic rings apart from the condensed rings, as well as some carbon groups like alkyl. Except for carbon group, there're lots of alkoxy, hydroxyl, carboxyl and sulfhydryl groups in coal, and some complex groups (mainly oxygen-containing groups), containing oxygen, sulfur and nitrogen like amidogen. Therefore, we can classify coals into different categories according to the ratio of carbon content in carbon groups and oxygen content in oxygen-containing groups. Anthracite, with highest degree of coalification, one kind of coal with highest carbon content. In general, the value of carbon content could reach 90%. The number of aromatic nucleus in basic anthracite structures increases dramatically, which tends to show graphite structure gradually, and it was obviously observed in models of Larsen (Cooper, B. R.. Petrakis, L. Eds., American Institute of Physics: New York, 66-81 (1981)). Theoretically, this graphite-like structure can effectively serve as precursor of graphene and graphene oxide synthesis. Coal resources are abundant in our country and thus the price is low. If we can use anthracite as raw material of graphene, the production cost can be significantly reduced. Besides, there're always residues of hydroxy, carbonyl and carboxyl groups in anthracite, which are more favorable for formation of graphene oxide compared to graphite.

Following documents show conventional method for preparing graphene oxide:
D1: "A practical carbo dioxide gas sensor using room-temperature hydrogen plasma reduced graphene oxide" disclosed by Muhammad Hafiz Syed et al., on SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL vol. 193, 12 December 2013 (2013-12-12), pages 692-700, XP028818856, ISSN:0925-4005, DOI:10.1016/J.SNB.2013.12.017.
D2: "Fabrication of Spirocyclic Phosphazene Epoxy-Based Nanocomposites with Graphene via Exfoliation of Graphite Platelets and Thermal Curing for Enhancement of Mechanical and Conductive Properties" disclosed by Hua Feng et al., on INDUSTRIAL& ENGINEERING CHEMISTRY RESEARCH., vol. 52, no.30, 31 July 2013 (2013-07-31), pages 10160-10171, XP55314838, US ISSN:0888-5885, DOI: 10.1021/ie400483x.
D3: "Graphene Sheets from Graphitized Anthracite Coal: Preparation, Decoration, and Application" by Quan Zhou et al., on ENERGY & FUELS., vol.26, no.8, 16 August 2012 (2012-08-16), pages 5186-5192, XP055285581, WASHINGTON DC, US. ISSN:0887-0624, DOI:10.1021/ef300919d.
D4: WO2010/079291 A2 (Method for preparing graphenes) published on July 15, 2010 (2010-07-15).
D5: CN103 833028A (Preparation method for graphene and graphene oxide based on anthracite) published on June 4, 2014 (2014-06-04).

### Invention contents

A method of preparing a graphene oxide, comprising:
a. preparation of an anthracite powder: washing, drying and grinding raw materials of anthracite, and then sieving it through 75 µm sieves to obtain the anthracite; purifying the anthracite with hydroxide of a molten alkali metal to obtain a purified anthracite, and washing the purified anthracite till a pH value reaching 7-8 to obtain a washed anthracite, and drying the washed anthracite to obtain an anthracite powder;
b. pretreatment of the anthracite powder: putting the anthracite powder obtained through step a. into a dispersant and treating it with an ultrasound to obtain a dispersing liquid of 0.1-0.5g/ml; characterized in that the dispersant is deionized water, an inorganic acid, a surfactant solution, or a mixture of two or more of them;
   mixing the dispersing liquid with pre-oxidant and treating it with an ultrasound environment; characterized in that a mass ratio of the anthracite powder and the pre-oxidant is 1:0-5; and the pre-oxidant is nitrate, dichromate, persulfate, permanganate, peroxide, phosphorus oxide, oxyiodide, or a mixture of two or more of them;
   water filtrating the dispersing liquid with pre-oxidant, and heat treating a filtrated dispersing liquid with pre-oxidant under microwave conditions of 400-900W for 5-30min to obtain a first mixture; natural cooling, grinding and sieving the first mixture to obtain a pretreated anthracite powder;
c. preparation of an anthracite oxide dispersion: putting the pretreated anthracite powder obtained through step b. into an intercalation agent to obtain an intercalation dispersion of 0.1-5g/ml; characterized in that the intercalation agent is an inorganic acid; treating the intercalation dispersion with the ultrasound at 20°C for 0.5-2 hours, and mixing it with an oxidizing agent; characterized in that a mass ratio of the oxidizing agent and the pretreated anthracite powder is 1 to 2-10; and the oxidizing agent is perchloric acid, nitric acid, sulfuric acid, persulfate, permanganate, chlorate, perchlorate, or a mixture of two or more of them;
   adding a catalyst for aromatization into the intercalation dispersion, characterized in that a mass ratio of the pretreated anthracite powder to the catalyst for aromatization is 100 to 10; and the catalyst for aromatization is cuprous chloride, ferric trichloride, ferrous chloride, zinc chloride, nickel chloride, manganese chloride, molybdenum trioxide, ammonium molybdate, molybdenum phosphide, zinc phosphide, or a mixture of two or more of them;
   treating the intercalation dispersion with the ultrasound at 30-50°C for 0.5-2 hours, and adding deionized water which has a same volume as that of the intercalation dispersion to obtain a second mixture; treating the second mixture with a constant temperature of 70-100°C for 1-5min;
   adding hydrogen peroxide into the intercalation dispersion with the deionized water; characterized in that a mass ratio of the hydrogen peroxide to the pretreated anthracite powder is 1:5-20; suction filtrating and washing the intercalation dispersion with the deionized water to obtain an anthracite oxide dispersion;
d. preparation of a graphene oxide colloid solution: treating the anthracite oxide dispersion obtained through step c. with an ultrasound stripping process for 1-5h, and with an ultrasound power being 100-600W, to obtain a graphene oxide colloid solution; and
e. preparation of a graphene oxide: treating the graphene oxide colloid solution from step d. with a centrifugal process, with a rotating speed being 4000r/min and a centrifugation time being 5min, and taking a supernatant of the graphene oxide colloid solution to obtain a graphene oxide solution;
adding an ammonium sulfate solution with a 2-5% mass concentration of ammonium sulfate into the supernatant, and then salting it out and suction filtrating to obtain a filter cake, washing the filter cake with deionized water, then with alcohol, and drying a washed filter cake to obtain the graphene oxide.

Compared to existing techniques, a preparation method of graphene oxide and graphene based on anthracite in our invention owns the following advantages. Firstly, regards to the raw materials, anthracite costs much less than graphite, and there're oxygen-containing groups in anthracite molecules, which could make the preparation process much easier than using graphite and thus reduce the production cost. Secondly, the preoxidation of anthracite by pre-oxidant in our invention could open the polymerization bond among aromatization structures and widen the distances between them, which could make the next oxidation step quicker and more complete. Besides, we adopt catalyst for aromatization in our invention to aromatize those non-aromatic groups in anthracite and make them better oxidized. Through this way we can reduce the dosage of oxidant and strong acid etc. compared to traditional methods, and avoid the strict conditions required for oxidation of non-aromatic groups. Thus we can save the production cost and make the reaction rate quicker and more complete when preparing graphene oxide, facilitating large-scale industrial production.

Further details of our present invention are described with specific embodiments below.

### Specific execution mode

### Execution Example 1

Put the raw materials of anthracite into processes of washing, drying and grinding, and then put them through sieves with mesh size of 75 µm to obtain comparatively pure anthracite powder. Process the anthracite powder with molten sodium hydroxide, which could remove sulfur and silicon impurities and radicals in it. Then wash it till the pH 7and dry it, then we can obtain ultra-clean anthracite powder. Take 1g of anthracite powder, put it through ultrasound dispersion into 10ml of concentrated sulfuric acid. Then mix it with potassium dichromate and process the mixture with ultrasound treatment for 0.5 hours. Add water to dilute the mixture and then suction filtrate it to remove the solvent. Heat the mixture at microwave condition of 900W for 5min and after a process of air drying, grinding and sieving, we can obtain ultra-clean anthracite powder (For simplicity, it is referred to as anthracite powder in next section of this embodiment) with pre-treatment.

Take some anthracite powder and disperse it into 10ml of concentrated sulfuric acid, and process the mixture with ultrasound treatment of 20°C for 0.5 hours. Then add potassium hypermanganate the mass ratio of which to anthracite powder is 1 to 4, in the term of 1g per minute into the mixture system. Then add 0.1g ferric trichloride into the mixture and treat it with ultrasound process at temperature 40°C for 1 hour. After the process of oxidation and aromatization, add deionized water which is the same volume as the reaction system and put it into pyrohydrolysis for 5min, with temperature being controlled below 100°C, in order to protect the oxygen-containing functional groups from being damaged. Finally, after hydrolysis, add hydrogen peroxide with the mass ratio of anthracite to it being 1 to 5 to remove needless oxidant. Then process the mixture with suction filtration and drying, and we can obtain the dispersed liquid of anthracite oxide.

Then treat the mixture with ultrasound stripping process with ultrasound power being 120W for 0.5 hours to obtain graphene oxide colloid solution. Put the solution into centrifugal process with rotating speed being 4000r/min for 5min to remove unstripped graphene oxide and other carbon impurities. Then take the supernatant as graphene oxide solution. Add the same volume of ammonium sulfate solution with 2% mass concentration as the mixture to salt out and suction filtrate it. Wash the filter cake with 5ml of deionized water, and then wash it with 5ml of ethyl alcohol and dry it in a vacuum oven with temperature being 55°C for 2 hours. After all those processes, we obtain the first target product, graphene oxide, with the total mass of 1.2g. The productive rate is 120% in term of anthracite powder.

Disperse graphene oxide obtained above in glycerol with mass concentration being 0. 1g/ml, and heat the mixture in a microwave oven with 900W power for 10min. After that put the mixture into ultrasound cleaner with 120W power for ultrasound treatment of 0.5 hours, and filtrate it. Then dry it under vacuum environment of 120°C for 1 hour and we can obtain the second target product, graphene, with a total mass of 0.83g. The productive rate is 83% in term of anthracite.

Both graphene oxide and graphene of our products, characterized by Raman spectra, have D-peak, G-peak and 2D-peak, which are unique to graphene. D-peak of graphene oxide is 1334cm⁻¹, and G-peak and 2D-peak are 1602 cm⁻¹ and 2833cm⁻¹, respectively; D-peak of graphene is 1335cm⁻¹, and G-peak and 2D-peak are 1587 cm⁻¹ and 2674cm⁻¹, respectively.

### Execution Example 2

Put the raw materials of anthracite into processes of washing, drying and grinding, and then put them through sieves with mesh size of 75 µm to obtain comparatively clean anthracite powder. Process the anthracite powder with molten sodium hydroxide, which could remove sulfur and silicon impurities and radicals in it. Then wash it till the pH value reaching 8 and dry it, then we can obtain ultra-clean anthracite powder. Take 1g of anthracite powder, put it through ultrasound dispersion into 5ml deionized water. Then add ammonium persulfate into the mixture and process it with ultrasound treatment for 0.5 hours. Add water to dilute the mixture and then suction filtrate it to remove the solvent. Heat the mixture at microwave condition of 900W for 10min and after air drying, grinding and sieving, we can obtain ultra-clean anthracite powder (For simplicity, it is referred to as anthracite powder in next section of this embodiment) with pre-treatment.

Take some anthracite powder and disperse it into 10ml of concentrated phosphoric acid, and process the mixture with ultrasound treatment of 20°C for 1 hour. Then add potassium chlorate and potassium hypermanganate the mass ratio of which to anthracite powder is 1:3 and 1:4, respectively, in the term of 1g per minute into the mixture system. Then add 0.05g nickel chloride into the mixture and treat it with ultrasound process with temperature being 40°C for 1 hour. After the process of oxidation and aromatization, add deionized water which is the same volume as the reaction system and put it into pyrohydrolysis for 5min, with temperature being controlled below 100°C, in order to protect the oxygen-containing functional groups from being damaged. Finally, after pyrohydrolysis is finished, add hydrogen peroxide with the mass ratio of anthracite to it being 1:10 to remove needless oxidant. Then process the mixture with suction filtration and washing, and we can obtain the dispersion liquid of anthracite oxide.

Then treat the mixture with ultrasound stripping process with ultrasound power being 300W for 1 hour to obtain graphene oxide colloid solution. Put the solution into centrifugal process with rotating speed being 4000r/min for 5min to remove unstripped graphene oxide and other carbon impurities. Then take the supernatant as graphene oxide solution. Add the same volume of ammonium sulfate solution with 2% mass concentration as the mixture to salt out and suction filtrate it. Wash the filter cake with 5ml of deionized water, and then wash it with 5ml of ethyl alcohol and dry it in a vacuum oven with temperature being 55°C for 2 hours. After all those processes, we obtain the first target product, graphene oxide, with the total mass of 1.1g. The productive rate is 110% in term of anthracite powder.

Disperse graphene oxide obtained above in glycerol with mass concentration being 0. 1g/ml, and heat the mixture in a microwave oven with 900W power for 10min. After that put the mixture into ultrasound cleaner with 120W power for ultrasound treatment of 0.5 hours, and suction filtrate it. Then dry it under vacuum environment of 120°C for 1 hour and we can obtain the second target product, graphene, with a total mass of 0.64g. The productive rate is 64% in term of anthracite.

Both graphene oxide and graphene of our products, characterized by Raman spectra, have D-peak, G-peak and 2D-peak, which are unique to graphene. D-peak of graphene oxide is 1365cm⁻¹, and G-peak and 2D-peak are 1589 cm⁻¹ and 2865cm⁻¹, respectively; D-peak of graphene is 1325cm⁻¹, and G-peak and 2D-peak are 1582 cm⁻¹ and 2696cm⁻¹, respectively.

### Execution Example 3

Put the raw materials of anthracite into processes of washing, drying and grinding, and then put them through sieves with mesh size of 75 µm to obtain comparatively clean anthracite powder. Process the anthracite powder with molten potassium hydroxide, which could remove sulfur and silicon impurities and radicals in it. Then wash it till the pH value reaching 7.5 and dry it, then we can obtain ultra-clean anthracite powder. Take 1g of anthracite powder, put it through ultrasound dispersion into 5ml aqueous CTAB solution with mass concentration being 5%. Then add 3g of potassiumpersulfate into the mixture and process it with ultrasound treatment for 0.5 hours. Add water to dilute the mixture and then suction filtrate it to remove the solvent. Put the mixture into heating process under microwave condition of 900W for 10min and after a process of air drying, grinding and sieving, we can obtain ultra-clean anthracite powder (For simplicity, it is referred to as anthracite powder in next section of this embodiment) with pre-treatment.

Take some anthracite powder and disperse it into 5ml of concentrated sulfuric acid, and process the mixture with ultrasound treatment of 20°C for 1 hour. Then add potassium chlorate and fuming nitric acid of which the mass ratio to anthracite powder is 1:3 and 1:3, respectively, in the term of 1g per minute into the mixture system. Then add 0.1g zinc chloride into the mixture and treat it with ultrasound process with temperature being 45°C for 2 hours. After the process of oxidation and aromatization, add deionized water which is the same volume as the reaction system and put it into pyrohydrolysis for 5min, with temperature being controlled below 100°C, in order to protect the oxygen-containing functional groups of graphene oxide from being damaged. Finally, after the process of pyrohydrolysis, add hydrogen peroxide with the mass ratio of anthracite to it being 1:10 to remove needless oxidant. Then process the mixture with suction filtration and washing, and we can obtain the dispersed liquid of anthracite oxide.

Then treat the mixture with ultrasound stripping process with ultrasound power being 300W for 1 hour to obtain graphene oxide colloid solution. Put the solution into centrifugal process with rotating speed being 4000r/min for 5min to remove unstripped graphene oxide and other carbon impurities. Then take the supernatant as graphene oxide solution. Add the same volume of ammonium sulfate solution with 2% mass concentration as the mixture to salt out and suction filtrate it. Wash the filter cake with 5ml deionized water, and then wash it with 5ml ethyl alcohol and dry it in a vacuum oven with temperature being 55°C for 2 hours. After all those processes, we obtain the first target product, graphene oxide, with the total mass of 1.32g. The productive rate is 132% in term of anthracite powder.

Disperse graphene oxide obtained above in glycol with mass concentration being 0. 1g/ml, and heat the mixture in a microwave oven with 900W power for 20min. After that put the mixture into ultrasound cleaner with 300W power for ultrasound treatment of 1 hour, and suction filtrate it. Then dry it under vacuum environment of 120°C for 1 hour and we can obtain the second target product, graphene, with a total mass of 0.96g. The productive rate is 96% in term of anthracite.

Both graphene oxide and graphene of our products, characterized by Raman spectra, have D-peak, G-peak and 2D-peak, which are unique to graphene. D-peak of graphene oxide is 1375cm⁻¹, and G-peak and 2D-peak are 1583 cm⁻¹ and 2810cm⁻¹, respectively; D-peak of graphene is 1380cm⁻¹, and G-peak and 2D-peak are 1588 cm⁻¹ and 2759cm⁻¹, respectively.

### Execution Example 4

Put the raw materials of anthracite into processes of washing, drying and grinding, and then put them through sieves with mesh size of 75 µm to obtain comparatively clean anthracite powder. Process the anthracite powder with molten cesium hydroxide, which could remove sulfur and silicon impurities and radicals in it. Then wash it till the pH value reaching 7.8 and dry it, then we can obtain ultra-clean anthracite powder. Take 1g of anthracite powder, put it through ultrasound dispersion into 10ml of aqueous solution of glycol with mass concentration being 70%. Then add 5g nitrite of potash into the mixture and process it with ultrasound treatment for 0.5 hours. Add water to dilute the mixture and then suction filtrate it to remove the solvent. Put the mixture into heating process under microwave condition of 400W for 30min and after air drying, grinding and sieving, we can obtain ultra-clean anthracite powder (For simplicity, it is referred to as anthracite powder in next section of this embodiment) with pre-treatment.

Take some of the anthracite powder and dispersed it into a mixture of 1ml concentrated sulfuric acid and 2ml phosphoric acid, and process the mixture with ultrasound treatment of 20°C for 1 hour. Then add fuming nitric acid the mass ratio of which to anthracite powder is 1:7 and 0.01g ammonium molybdate into the mixture and treat it with ultrasound process with temperature being 35°C for 2 hours. After the process of oxidation and aromatization, add deionized water which is the same volume as the reaction system and put it into pyrohydrolysis for 3min, with temperature being controlled below 100°C, in order to protect the oxygen-containing functional groups of graphene oxide from being damaged. Finally, after the process of pyrohydrolysis, add hydrogen peroxide with the mass ratio of anthracite to it being 1:20 to remove needless oxidant. Then process the mixture with suction filtration and washing, and we can obtain the dispersed liquid of anthracite oxide.

Then treat the mixture with ultrasound stripping process with ultrasound power being 600W for 1 hour to obtain graphene oxide colloid solution. Put the solution into centrifugal process with rotating speed being 4000r/min for 5min to remove unstripped graphene oxide and other carbon impurities. Then take the supernatant as graphene oxide solution. Add the same volume of ammonium sulfate solution with 2% mass concentration as the mixture to salt out and suction filtrate it. Wash the filter cake with 5ml deionized water, and then wash it with 5ml ethyl alcohol and dry it in a vacuum oven with temperature being 55°C for 2 hours. After all those processes, we obtain the first target product, graphene oxide, with the total mass of 1.28g. The productive rate is 128% in term of anthracite powder.

Disperse graphene oxide obtained above in N-methyl pyrrolidone with mass concentration being 1g/ml, and heat the mixture in a microwave oven with 900W power for 20min. After that put the mixture into ultrasound cleaner with 300W power for ultrasound treatment of 3 hours, and suction filtrate it. Then dry it under vacuum environment of 120°C for 1 hour and we can obtain the second target product, graphene, with a total mass of 0.9g. The productive rate is 90% in term of anthracite.

Both graphene oxide and graphene of our products, characterized by Raman spectra, have D-peak, G-peak and 2D-peak, which are unique to graphene. D-peak of graphene oxide is 1356cm⁻¹, and G-peak and 2D-peak are 1610 cm⁻¹ and 2782cm⁻¹, respectively; D-peak of graphene is 1346cm⁻¹, and G-peak and 2D-peak are 1577 cm⁻¹ and 2739cm⁻¹, respectively.

### Execution Example 5

Put the raw materials of anthracite into processes of washing, drying and grinding, and then put them through sieves with mesh size of 75 µm obtain comparatively clean anthracite powder. Process the anthracite powder with molten sodium hydroxide, which could remove sulfur and silicon impurities and radicals in it. Then wash it till the pH value reaching 7.2 and dry it, then we can obtain ultra-clean anthracite powder. Take 1g of anthracite powder, put it through ultrasound dispersion into 5ml N-methyl pyrrolidone. Then add 3g lodinepentoxide into the mixture and process it with ultrasound treatment for 1 hour. Add water to dilute the mixture and then suction filtrate it to remove the solvent. Put the mixture into heating process under microwave condition of 400W for 30min and after air drying, grinding and sieving, we can obtain ultra-clean anthracite powder (For simplicity, it is referred to as anthracite powder in next section of this embodiment) with pre-treatment.

Take some anthracite powder and disperse it into 10ml sulfuric acid, and process the mixture with ultrasound treatment of 20°C for 1 hour. Then gently add fuming nitric acid and potassium perchlorate the mass ratio of which to anthracite powder is 1:3 and 1:2, respectively. Then add 0.1g of molybdenum phosphide into the mixture and treat it with ultrasound process with temperature being 45°C for 2 hours. After the process of oxidation and aromatization, add deionized water which is the same volume as the reaction system and put it into pyrohydrolysis for 5min, with temperature being controlled below 70°C, in order to protect the oxygen-containing functional groups of graphene oxide from being damaged. Finally, after the process of pyrohydrolysis, add hydrogen peroxide with the mass ratio of anthracite to it being 1:15 to remove needless oxidant. Then process the mixture with suction filtration and washing, and we can obtain the dispersed liquid of anthracite oxide.

Then treat the mixture with ultrasound stripping process with ultrasound power being 500W for 1 hour to obtain graphene oxide colloid solution. Put the solution into centrifugal process with rotating speed being 4000r/min for 5min to remove unstripped graphene oxide and other carbon impurities. Then take the supernatant as graphene oxide solution. Add the same volume of ammonium sulfate solution with 2% mass concentration as the mixture to salt out and suction filtrate it. Wash the filter cake with 5ml deionized water, and then wash it with 5ml ethyl alcohol and dry it in a vacuum oven with temperature being 55°C for 2 hours. After all those processes, we obtain the first target product, graphene oxide, with the total mass of 1.19g. The productive rate is 119% in term of anthracite powder.

Disperse graphene oxide obtained above in deionized water with mass concentration being 0. 1g/ml, and then add hydrazine hydrate with mass concentration being80%. The mass ratio of hydrazine hydrate to graphene oxide is 1:5. Reflux the mixture for 1 hour. Afterwards put the mixture into ultrasound cleaner with 300W power for ultrasound treatment of 3 hours, and suction filtrate it. Then dry it under vacuum environment of 120°C for 1 hour and we can obtain the second target product, graphene, with a total mass of 0.76g. The productive rate is 76% in term of anthracite.

Both graphene oxide and graphene of our products, characterized by Raman spectra, have D-peak, G-peak and 2D-peak, which are unique to graphene. D-peak of graphene oxide is 1349cm⁻¹, and G-peak and 2D-peak are 1603cm⁻¹ and 2722cm⁻¹, respectively; D-peak of graphene is 1370cm⁻¹, and G-peak and 2D-peak are 1591 cm⁻¹ and 2706cm⁻¹, respectively.

### Execution Example 6

Put the raw materials of anthracite into processes of washing, drying and grinding, and then put them through sieves with mesh size of 75 µm to obtain comparatively clean anthracite powder. Process the anthracite powder with molten sodium hydroxide, which could remove sulfur and silicon impurities and radicals in it. Then wash it till the pH value reaching 7.4 and dry it, then we can obtain ultra-clean anthracite powder. Take 1g of anthracite powder, put it through ultrasound dispersion into 10ml of concentrated sulfuric acid. Then add 4g nitrate of potash into the mixture and process it with ultrasound treatment for 0.5 hours. Add water to dilute the mixture and then suction filtrate it to remove the solvent. Put the mixture into heating process under microwave condition of 900W for 5min and after air drying, grinding and sieving, we can obtain ultra-clean anthracite powder (For simplicity, it is referred to as anthracite powder in next section of this embodiment) with pre-treatment.

Take some anthracite powder and disperse it into 10ml concentrated sulfuric acid, and process the mixture with ultrasound treatment of 20°C for 0.5 hours. Then gently add potassium permanganate and potassium persulfate the mass ratio of which to anthracite powder is 1:4 and 1:2, respectively, in the term of 1g per minute into the mixture system. Then add 0.1g of molybdenum trioxide into the mixture and treat it with ultrasound process with temperature being 40°C for 1 hour. After the process of oxidation and aromatization, add deionized water which is the same volume as the reaction system and put it into pyrohydrolysis for 5min, with temperature being controlled below 100°C, in order to protect the oxygen-containing functional groups of graphene oxide from being damaged. Finally, after pyrohydrolysis, add hydrogen peroxide with the mass ratio of anthracite to it being 1:5 to remove needless oxidant. Then process the mixture with suction filtration and washing, and we can obtain the dispersed liquid of anthracite oxide.

Then treat the mixture with ultrasound stripping process with ultrasound power being 600W for 2 hours to obtain graphene oxide colloid solution. Put the solution into centrifugal process with rotating speed being 4000r/min for 5min to remove unstripped graphene oxide and other carbon impurities. Then take the supernatant as graphene oxide solution. Add ammonium sulfate solution with 2% mass concentration and the same volume as the mixture to salt out and suction filtrate it. Wash the filter cake with 5ml deionized water, and then wash it with 5ml ethyl alcohol and dry it in a vacuum oven with temperature being 55°C for 2 hours. After all those processes, we obtain the first target product, graphene oxide, with the total mass of 1.5g. The productive rate is 150% in term of anthracite powder.

Disperse graphene oxide obtained above in N-methyl pyrrolidone with mass concentration being 0.1g/ml, and then add metallic lithium-ethylenediamine solution with mass concentration being 5%. The mass ratio of metallic lithium-ethylenediamine solution to graphene oxide is 1:5. Reflux the mixture for 1 hour. Afterwards put the mixture into ultrasound cleaner with 120W power for ultrasound treatment of 1 hour, and suction filtrate it. Then dry it under vacuum environment of 120°C for 1 hour and we can obtain the second target product, graphene, with a total mass of 0.97g. The productive rate is 97% in term of anthracite.

Both graphene oxide and graphene of our products, characterized by Raman spectra, have D-peak, G-peak and 2D-peak, which are unique to graphene. D-peak of graphene oxide is 1311cm⁻¹, and G-peak and 2D-peak are 1595cm⁻¹ and 2881cm⁻¹, respectively; D-peak of graphene is 1376cm⁻¹, and G-peak and 2D-peak are 1580 cm⁻¹ and 2754cm⁻¹, respectively.

### Comparative example 1

Take 1g graphite powder and synthesize graphene oxide with standard Hummers method, we obtain the first target product, graphene oxide, with the total mass of 0.89g. The productive rate is 89% in term of graphite. Use graphene oxide obtained to prepare graphene by microwave thermal reduction method, and we can obtain the second target product, graphene, with a total mass of 0.45g. The productive rate is 45% in term of graphite.

Both graphene oxide and graphene of our products, characterized by Raman spectra, have D-peak, G-peak and 2D-peak, which are unique to graphene. D-peak of graphene oxide is 1364cm⁻¹, and G-peak and 2D-peak are 1600cm⁻¹ and 2835cm⁻¹, respectively; D-peak of graphene is 1374cm⁻¹, and G-peak and 2D-peak are 1582 cm⁻¹ and 2759cm⁻¹, respectively.

According to the productive rates of execution examples 1-6 and comparative example 1, the productivity of graphene oxide and graphene prepared by anthracite is apparently larger than that prepared by traditional ways using graphite. Firstly, from the perspective of raw materials, graphite costs more than anthracite. Secondly, with the same weight of raw materials, production output of graphene oxide and graphene prepared by anthracite is larger than that prepared by traditional method using graphite, Thus reducing the production cost effectively.

According to the data from execution examples 1-6 and comparative example 1, it's obvious that with the raw materials at the same weight, production output of graphene oxide and graphene prepared by anthracite is larger than that prepared by traditional method using graphite, It can be concluded that our invention could save the production cost of graphene oxide and graphene effectively.

### Comparative example 2

Take some anthracite powder and synthesize graphene oxide by standard Hummers method. After many repeated experiments, it is fond that if we synthesize graphene oxide and graphene by standard Hummers method using anthracite as raw material, we cannot obtain desirable products. Thus our invention overcomes the technical bias that it's impossible to synthesize graphene oxide and graphene by existing technology using anthracite, and reduces the production cost of graphene and graphene oxide by our own original process.

### Execution Example 7

Put the raw materials of anthracite into processes of washing, drying and grinding, and then put them through sieves with mesh size of 75 µm to obtain comparatively clean anthracite powder. Process the anthracite powder with the mixture of molten cesium hydroxide and potassium hydroxide, which could remove sulfur and silicon impurities and radicals in it. Then wash it till the pH value reaching 7.2 and dry it, then we can obtain ultra-clean anthracite powder. Take 1g ultra-clean anthracite powder, put it through ultrasound dispersion into 10ml deionized water. Then add 2g of ammonium persulfate into the mixture and process it with ultrasound treatment for 1 hour. Add water to dilute the mixture and then suction filtrate it to remove the solvent. Put the mixture into heating process under microwave condition of 400W for 5min and after air drying, grinding and sieving, we can obtain ultra-clean anthracite powder (For simplicity, it is referred to as anthracite powder in next section of this embodiment) with pre-treatment.

Take some anthracite powder and disperse it into 0.2ml of phosphoric acid, and process the mixture with ultrasound treatment of 20°C for 0.5 hours. Then gently add 0.2g potassium permanganate and 0.02g cuprous chloride and treat it with ultrasound process with temperature being 30°C for 0.5 hours. After oxidation and aromatization, add deionized water which is the same volume as the reaction system and put it into pyrohydrolysis for 1min, with temperature being 70°C, in order to protect the oxygen-containing functional groups of graphene oxide from being damaged. Finally, after the process of pyrohydrolysis, add 8g hydrogen peroxide to remove needless oxidant. Then process the mixture with suction filtration and washing, and we can obtain the dispersed liquid of anthracite oxide.

Then treat the mixture with ultrasound stripping process with ultrasound power being 100W for 1 hour to obtain graphene oxide colloid solution. Put the solution into centrifugal process with rotating speed being 4000r/min for 5min to remove unstripped graphene oxide and other carbon impurities. Then take the supernatant as graphene oxide solution. Add ammonium sulfate solution with 2% mass concentration and the same volume as the mixture to salt out and suction filtrate it. Wash the filter cake with 5ml deionized water, and then wash it with 5ml ethyl alcohol and dry it in a vacuum oven with temperature being 55°C for 2 hours. After all those processes, we obtain the first target product, graphene oxide, with the total mass of 1.1g. The productive rate is 110% in term of anthracite powder.

Disperse graphene oxide obtained above in 11ml concentrated sulfuric acid, and then add 1.1g electronic ammine solution with mass concentration being 1%. Reflux the mixture for 1 hour. Afterwards put the mixture into ultrasound cleaner with 100W power for ultrasound treatment of 0.5 hours, and suction filtrate it. Then dry it under vacuum environment of 120°C for 1 hour and we can obtain the second target product, graphene, with a total mass of 0.79g. The productive rate is 79% in term of anthracite. Both graphene oxide and graphene of our products, characterized by Raman spectra, have D-peak, G-peak and 2D-peak, which are unique to graphene. D-peak of graphene oxide is 1357cm⁻¹, and G-peak and 2D-peak are 1602cm⁻¹ and 2843cm⁻¹, respectively; D-peak of graphene is 1369cm⁻¹, and G-peak and 2D-peak are 1579 cm⁻¹ and 2710cm⁻¹, respectively.

### Execution Example 8

Put the raw materials of anthracite into processes of washing, drying and grinding, and then put them through sieves with mesh size of 75 µm to obtain comparatively clean anthracite powder. Process the anthracite powder with the mixture of molten sodium hydroxide and potassium hydroxide, which could remove sulfur and silicon impurities and radicals in it. Then wash it till the pH value reaching 7.2 and dry it, then we can obtain ultra-clean anthracite powder. Take 1g ultra-clean anthracite powder, put it through ultrasound dispersion into 20ml concentrated nitric acid. Then add 3g phosphorus pentoxide into the mixture and process it with ultrasound treatment for 1 hour. Add water to dilute the mixture and then suction filtrate it to remove the solvent. Put the mixture into heating process under microwave condition of 500W for 10min and after air drying, grinding and sieving, we can obtain ultra-clean anthracite powder (For simplicity, it is referred to as anthracite powder in next section of this embodiment) with pre-treatment.

Take some anthracite powder and disperse it into 1ml boric acid, and process the mixture with ultrasound treatment of 20°C for 1 hour. Then gently add 0.1g fuming nitric acid and 0.05g ferrous chloride and treat it with ultrasound process with temperature being 40°C for 0.8 hours. After the process of oxidation and aromatization, add deionized water which is the same volume as the reaction system and put it into pyrohydrolysis for 2min, with temperature being 75°C, in order to protect the oxygen-containing functional groups of graphene oxide from being damaged. Finally, after the process of pyrohydrolysis, add 15g hydrogen peroxide to remove needless oxidant. Then process the mixture with suction filtration and washing, and we can obtain the dispersed liquid of anthracite oxide.

Then treat the mixture with ultrasound stripping process with ultrasound power being 200W for 2 hours to obtain graphene oxide colloid solution. Put the solution into centrifugal process with rotating speed being 4000r/min for 5min to remove unstripped graphene oxide and other carbon impurities. Then take the supernatant as graphene oxide solution. Add the same volume of ammonium sulfate solution with 3% mass concentration as the mixture to salt out and suction filtrate it. Wash the filter cake with 5ml deionized water, and then wash it with 5ml ethyl alcohol and dry it in a vacuum oven with temperature being 55°C for 2 hours. After all those processes, we obtain the first target product, graphene oxide, with the total mass of 1.24g. The productive rate is 124% in term of anthracite powder.

Disperse graphene oxide obtained above in 1.24ml concentrated nitric acid, and then add 4g of hydrazine hydrate with mass concentration being 80%. Reflux the mixture for 1 hour. Afterwards put the mixture into ultrasound cleaner with 150W power for ultrasound treatment of 1 hour, and suction filtrate it. Then dry it under vacuum environment of 120°C for 1 hour and we can obtain the second target product, graphene, with a total mass of 0.83g. The productive rate is 83% in term of anthracite.

Both graphene oxide and graphene of our products, characterized by Raman spectra, have D-peak, G-peak and 2D-peak, which are unique to graphene. D-peak of graphene oxide is 1350cm⁻¹, and G-peak and 2D-peak are 1587cm⁻¹ and 2839cm⁻¹, respectively; D-peak of graphene is 1372cm⁻¹, and G-peak and 2D-peak are 1578 cm⁻¹ and 2700cm⁻¹, respectively.

### Execution Example 9

Put the raw materials of anthracite into processes of washing, drying and grinding, and then put them through sieves with mesh size of 75 µm to obtain comparatively clean anthracite powder. Process the anthracite powder with the mixture of molten sodium hydroxide and cesium hydroxide, which could remove sulfur and silicon impurities and radicals in it. Then wash it till the pH value reaching 7.2 and dry it, then we can obtain ultra-clean anthracite powder. Take 1g of ultra-clean anthracite powder, put it through ultrasound dispersion into 30ml of aqueous TBAB solution with mass concentration being 5%. Then add 4g potassium persulfate and 1g lodinepentoxide into the mixture and process it with ultrasound treatment for 1 hour. Add water to dilution the mixture and then suction filtrate it to remove the solvent. Put the mixture into heating process under microwave condition of 600W for 15min and after air drying, grinding and sieving, we can obtain ultra-clean anthracite powder (For simplicity, it is referred to as anthracite powder in next section of this embodiment) with pre-treatment.

Take some anthracite powder and disperse it into 4ml of ferric trichloride, and process the mixture with ultrasound treatment of 20°C for 2 hours. Then gently add 0.3g potassium perchloerate and 0.06g zinc chloride and treat it with ultrasound process with temperature being 50°C for 1 hour. After the process of oxidation and aromatization, add deionized water which is the same volume as the reaction system and put it into pyrohydrolysis for 3min, with temperature being 80°C, in order to protect the oxygen-containing functional groups of graphene oxide from being damaged. Finally, after the process of pyrohydrolysis, add 18g of hydrogen peroxide to remove needless oxidant. Then process the mixture with suction filtration and washing, and we can obtain the dispersed liquid of anthracite oxide.

Then treat the mixture with ultrasound stripping process with ultrasound power being 300W for 4 hours to obtain graphene oxide colloid solution. Put the solution into centrifugal process with rotating speed being 4000r/min for 5min to remove unstripped graphene oxide and other carbon impurities. Then take the supernatant as graphene oxide solution. Add ammonium sulfate solution with 4% mass concentration and the same volume as the mixture to salt out and suction filtrate it. Wash the filter cake with 5ml deionized water, and then wash it with 5ml ethyl alcohol and dry it in a vacuum oven with temperature being 55°C for 2 hours. After all those processes, we obtain the first target product, graphene oxide, with the total mass of 1.48g. The productive rate is 148% in term of anthracite powder.

Disperse graphene oxide obtained above in 10ml of aqueous TBAB solution with mass concentration being 5%, and then add 3g of sodium thiosulfate. Reflux the mixture for 1 hour. Afterwards put the mixture into ultrasound cleaner with 200W power for ultrasound treatment of 1.5 hours, and suction filtrate it. Then dry it under vacuum environment of 120°C for 1 hour and we can obtain the second target product, graphene, with a total mass of 0.94g. The productive rate is 94% in term of anthracite.

Both graphene oxide and graphene of our products, characterized by Raman spectra, have D-peak, G-peak and 2D-peak, which are unique to graphene. D-peak of graphene oxide is 1363cm⁻¹, and G-peak and 2D-peak are 1585cm⁻¹ and 2845cm⁻¹, respectively; D-peak of graphene is 1370cm⁻¹, and G-peak and 2D-peak are 1580 cm⁻¹ and 2705cm⁻¹, respectively.

### Execution Example 10

Put the raw materials of anthracite into processes of washing, drying and grinding, and then put them through sieves with mesh size of 75 µm to obtain comparatively clean anthracite powder. Process the anthracite powder with the mixture of molten sodium hydroxide, potassium hydroxide and cesium hydroxide, which could remove sulfur and silicon impurities and radicals in it. Then wash it till the pH value reaching 7.2 and dry it, then we can obtain ultra-clean anthracite powder. Take 1g of ultra-clean anthracite powder, put it through ultrasound dispersion into 40ml of phosphoric acid. Then add a mixture of 0.5g of nitrate of potash and 1g of lodinepentoxide into the mixture and process it with ultrasound treatment for 1 hour. Add water to dilute the mixture and then suction filtrate it to remove the solvent. Put the mixture into heating process under microwave condition of 700W for 20min and after air drying, grinding and sieving, we can obtain ultra-clean anthracite powder (For simplicity, it is referred to as anthracite powder in next section of this embodiment) with pre-treatment.

Take some anthracite powder and disperse it into 6ml of ferric trichloride, and process the mixture with ultrasound treatment of 20°C for 0.8 hours. Gently add a mixture of 0.1g potassium perchloerate and 0.4g potassium permanganate, then add 0.08g manganese chloride and treat it with ultrasound process with temperature being 50°C for 1.5 hours. After the process of oxidation and aromatization, add deionized water which is the same volume as the reaction system and put it into pyrohydrolysis for 4min, with temperature being 90°C, in order to protect the oxygen-containing functional groups of graphene oxide from being damaged. Finally, after the process of pyrohydrolysis, add 20g of hydrogen peroxide to remove needless oxidant. Then process the mixture with suction filtration and washing, and we can obtain the dispersed liquid of anthracite oxide.

Then treat the mixture with ultrasound stripping process with ultrasound power being 500W for 3 hours to obtain graphene oxide colloid solution. Put the solution into centrifugal process with rotating speed being 4000r/min for 5min to remove unstripped graphene oxide and other carbon impurities. Then take the supernatant as graphene oxide solution. Add ammonium sulfate solution with 3.5% mass concentration and the same volume as the mixture to salt out and suction filtrate it. Wash the filter cake with 5ml deionized water, and then wash it with 5ml ethyl alcohol and dry it in a vacuum oven with temperature being 55°C for 2 hours. After all those processes, we obtain the first target product, graphene oxide, with the total mass of 1.05g. The productive rate is 105% in term of anthracite powder.

Disperse graphene oxide obtained above in 70ml of aqueous CTAB solution with mass concentration being 5%, and then add 2g united dithionite. Reflux the mixture for 1 hour. Afterwards put the mixture into ultrasound cleaner with 250W power for ultrasound treatment of 2 hours, and suction filtrate it. Then dry it under vacuum environment of 120°C for 1 hour and we can obtain the second target product, graphene, with a total mass of 0.78g. The productive rate is 78% in term of anthracite.

Both graphene oxide and graphene of our products, characterized by Raman spectra, have D-peak, G-peak and 2D-peak, which are unique to graphene. D-peak of graphene oxide is 1355cm⁻¹, and G-peak and 2D-peak are 1588cm⁻¹ and 2850cm⁻¹, respectively; D-peak of graphene is 1370cm⁻¹, and G-peak and 2D-peak are 1582 cm⁻¹ and 2700cm⁻¹, respectively.

### Execution Example 12

Put the raw materials of anthracite into processes of washing, drying and grinding, and then put them through sieves with mesh size of 75 µm to obtain comparatively clean anthracite powder. Process the anthracite powder with potassium hydroxide, which could remove sulfur and silicon impurities and radicals in it. Then wash it till the pH value reaching 7.2 and dry it, then we can obtain ultra-clean anthracite powder. Take 1g of ultra-clean anthracite powder, put it through ultrasound dispersion into a mixture of 30ml of aqueous CTAB solution with mass concentration being 5% and 20ml of glycerol. Add 1g ammonium persulfate, 1g potassium sulphate, 1g nitrate of potash, 1g phosphorus pentoxide and 1g iodine pentoxide into the mixture and process it with ultrasound treatment for 1 hour. Add water to dilute the mixture and then suction filtrate it to remove the solvent. Put the mixture into heating process under microwave condition of 900W for 30min and after air drying, grinding and sieving, we can obtain ultra-clean anthracite powder (For simplicity, it is referred to as anthracite powder in next section of this embodiment) with pre-treatment.

Take some anthracite powder and disperse it into 10ml of boric acid, and process the mixture with ultrasound treatment of 20°C for 1.8 hours. Gently add a mixture of 0.1g fuming nitrite acid, 0.2g potassium permanganate and 0.2g sodium perchlorate, then add 0.1g zinc phosphide and treat it with ultrasound process with temperature being 45°C for 2 hours. After the process of oxidation and aromatization, add deionized water which is the same volume as the reaction system and put it into pyrohydrolysis for 5min, with temperature being 100°C, in order to protect the oxygen-containing functional groups of graphene oxide from being damaged. Finally, after the process of pyrohydrolysis, add 5g hydrogen peroxide to remove needless oxidant. Then process the mixture with suction filtration and washing, and we can obtain the dispersed liquid of anthracite oxide.

Then treat the mixture with ultrasound stripping process with ultrasound power being 600W for 5 hours to obtain graphene oxide colloid solution. Put the solution into centrifugal process with rotating speed being 4000r/min for 5min to deposit unstripped graphene oxide and other carbon impurities. Then take the supernatant as graphene oxide solution. Add the same volume of ammonium sulfate solution with 5% mass concentration as the mixture to salt out and suction filtrate it. Wash the filter cake with 5ml deionized water, and then wash it with 5ml ethyl alcohol and dry it in a vacuum oven with temperature being 55°C for 2 hours. After all those processes, we obtain the first target product, graphene oxide, with the total mass of 1.3g. The productive rate is 130% in term of anthracite powder.

Disperse graphene oxide obtained above into 8ml of N-methyl-2-pyrrolidone, then add 5g of sodium thiosulfate and 1.5g of united dithionite into the mixture. Reflux the mixture for 1 hour. Afterwards put the mixture into ultrasound cleaner with 280W power for ultrasound treatment of 3 hours, and suction filtrate it. Then dry it under vacuum environment of 120°C for 1 hour and we can obtain the second target products, graphene, with a total mass of 0.86g. The productive rate is 86% in term of anthracite. Both graphene oxide and graphene of our products, characterized by Raman spectra, have D-peak, G-peak and 2D-peak, which are unique to graphene. D-peak of graphene oxide is 1364cm⁻¹, and G-peak and 2D-peak are 1603cm⁻¹ and 2847cm⁻¹, respectively; D-peak of graphene is 1368cm⁻¹, and G-peak and 2D-peak are 1582 cm⁻¹ and 2703cm⁻¹, respectively.

According to the data from execution examples 7-12 and comparative example 1, it's obvious that with the raw materials at the same weight, production output of graphene oxide and graphene prepared by anthracite is larger than that prepared by traditional method using graphite, It can be concluded that our invention could save the production cost of graphene oxide and graphene effectively.

## Claims

1. A method of preparing a graphene oxide, comprising:
a. preparation of an anthracite powder: washing, drying and grinding raw materials of anthracite, and then sieving it through 75 µm sieves to obtain the anthracite;
purifying the anthracite with hydroxide of a molten alkali metal to obtain a purified anthracite, and washing the purified anthracite till a pH value reaching 7-8 to obtain a washed anthracite, and drying the washed anthracite to obtain an anthracite powder;
b. pretreatment of the anthracite powder: putting the anthracite powder obtained through step a. into a dispersant and treating it with an ultrasound to obtain a dispersing liquid of 0.1-0.5g/ml; **characterized in that** the dispersant is deionized water, an inorganic acid, a surfactant solution, or a mixture of two or more of them;
mixing the dispersing liquid with pre-oxidant and treating it with an ultrasound environment; **characterized in that** a mass ratio of the anthracite powder and the pre-oxidant is 1:0-5; and the pre-oxidant is nitrate, dichromate, persulfate, permanganate, peroxide, phosphorus oxide, oxyiodide, or a mixture of two or more of them;
water filtrating the dispersing liquid with pre-oxidant, and heat treating a filtrated dispersing liquid with pre-oxidant under microwave conditions of 400-900W for 5-30min to obtain a first mixture; natural cooling, grinding and sieving the first mixture to obtain a pretreated anthracite powder;
c. preparation of an anthracite oxide dispersion: putting the pretreated anthracite powder obtained through step b. into an intercalation agent to obtain an intercalation dispersion of 0.1-5g/ml; **characterized in that** the intercalation agent is an inorganic acid;
treating the intercalation dispersion with the ultrasound at 20°C for 0.5-2 hours, and mixing it with an oxidizing agent; **characterized in that** a mass ratio of the oxidizing agent and the pretreated anthracite powder is 1 to 2-10; and the oxidizing agent is perchloric acid, nitric acid, sulfuric acid, persulfate, permanganate, chlorate, perchlorate, or a mixture of two or more of them;
adding a catalyst for aromatization into the intercalation dispersion, **characterized in that** a mass ratio of the pretreated anthracite powder to the catalyst for aromatization is 100 to 10; and the catalyst for aromatization is cuprous chloride, ferric trichloride, ferrous chloride, zinc chloride, nickel chloride, manganese chloride, molybdenum trioxide, ammonium molybdate, molybdenum phosphide, zinc phosphide, or a mixture of two or more of them;
treating the intercalation dispersion with the ultrasound at 30-50°C for 0.5-2 hours, and adding deionized water which has a same volume as that of the intercalation dispersion to obtain a second mixture; treating the second mixture with a constant temperature of 70-100°C for 1-5min;
adding hydrogen peroxide into the intercalation dispersion with the deionized water; **characterized in that** a mass ratio of the hydrogen peroxide to the pretreated anthracite powder is 1:5-20; suction filtrating and washing the intercalation dispersion with the deionized water to obtain an anthracite oxide dispersion;
d. preparation of a graphene oxide colloid solution: treating the anthracite oxide dispersion obtained through step c. with an ultrasound stripping process for 1-5h, and with an ultrasound power being 100-600W, to obtain a graphene oxide colloid solution; and
e. preparation of a graphene oxide: treating the graphene oxide colloid solution from step d. with a centrifugal process, with a rotating speed being 4000r/min and a centrifugation time being 5min, and taking a supernatant of the graphene oxide colloid solution to obtain a graphene oxide solution;
adding an ammonium sulfate solution with a 2-5% mass concentration of ammonium sulfate into the supernatant, and then salting it out and suction filtrating to obtain a filter cake, washing the filter cake with deionized water, then with alcohol, and drying a washed filter cake to obtain the graphene oxide.

2. The method of claim 1, **characterized in that** the hydroxide of the molten alkali metal in step a. comprises at least one material selected from the group consisting of potassium hydroxide, sodium hydroxide and cesium hydroxide.

3. The method of claim 1, **characterized in that** the dispersant in step b. comprises at least one material selected from the group consisting of deionized water, phosphoric acid, concentrated sulfuric acid, concentrated nitric acid, a 5% aqueous solution of cetyl trimethyl ammonium bromide, a 5% aqueous solution of tetrabutylammonium bromide, glycerin, ethylene glycol and n-methyl-2-pyrrolidone.

4. The method of claim 1, **characterized in that** the pre-oxidant in step b. comprises at least one material selected from the group consisting of ammonium persulfate, potassium persulfate, potassium nitrate, phosphoric anhydride and iodine pentoxide.

5. The method of claim 1, **characterized in that** the intercalation agent in step c. comprises at least one material selected from the group consisting of concentrated sulfuric acid, phosphoric acid, boric acid, ferric trichloride, and sodium borate.

6. The method of claim 1, **characterized in that** the oxidizing agent in step c. comprises at least one material selected from the group consisting of permanganate, chlorate, fuming nitric acid and perchlorate.

7. The method of claim 1, **characterized in that** the catalyst for aromatization in step c. comprises at least one material selected from the group consisting of ferric trichloride, nickel chloride and molybdenum trioxide.

8. The method of claim 1, **characterized in that** the drying process in step e. is drying the washed filter cake in vacuum oven for 2 hours.

## Patentansprüche

1. Verfahren zur Herstellung eines Graphenoxids, umfassend:
a. Herstellung eines Anthrazitpulvers: Waschen, Trocknen und Mahlen von Anthrazitrohstoffen und anschließendes Sieben durch 75 µm-Siebe, um den Anthrazit zu erhalten;
Reinigen der Anthrazite mit Hydroxid eines geschmolzenen Alkalimetalls, um eine gereinigte Anthrazite zu erhalten, und Waschen der gereinigten Anthrazite bis zu einem pH-Wert von 7-8, um eine gewaschene Anthrazite zu erhalten, und Trocknen der gewaschenen Anthrazite, um ein Anthrazitpulver zu erhalten;
b. Vorbehandeln des Anthrazitpulvers: Einbringen des in Schritt a. erhaltenen Anthrazitpulvers in ein Dispergiermittel und Behandlung mit Ultraschall, um eine Dispergierflüssigkeit von 0.1-0.5 g/ml zu erhalten; **dadurch gekennzeichnet, dass** das Dispergiermittel deionisiertes Wasser, eine anorganische Säure, eine Tensidlösung oder eine Mischung von zwei oder mehreren davon ist;
Mischen der Dispergierflüssigkeit mit einem Voroxidationsmittel und Behandeln mit einer Ultraschallumgebung; **dadurch gekennzeichnet, dass** ein Massenverhältnis des Anthrazitpulvers und des Voroxidationsmittels 1:0-5 beträgt; und das Voroxidationsmittel Nitrat, Dichromat, Persulfat, Permanganat, Peroxid, Phosphoroxid, Oxyiodid oder eine Mischung von zwei oder mehreren davon ist;
Wasser, das die Dispergierflüssigkeit mit Voroxidationsmittel filtriert, und Wärmebehandlung einer filtrierten Dispergierflüssigkeit mit Voroxidationsmittel unter Mikrowellenbedingungen von 400-900W für 5-30min, um eine erste Mischung zu erhalten; natürliches Abkühlen, Mahlen und Sieben der ersten Mischung, um ein vorbehandeltes Anthrazitpulver zu erhalten;
c. Herstellung einer Anthrazitoxiddispersion: Einbringen des durch Schritt b. erhaltenen vorbehandelten Anthrazitpulvers in ein Interkalationsmittel, um eine Interkalationsdispersion von 0.1 5g/ml zu erhalten; **dadurch gekennzeichnet, dass** das Interkalationsmittel eine anorganische Säure ist;
Behandeln der Interkalationsdispersion mit Ultraschall bei 20°C für 0.5-2 Stunden und Mischen mit einem Oxidationsmittel; **dadurch gekennzeichnet, dass** ein Massenverhältnis des Oxidationsmittels und des vorbehandelten Anthrazitpulvers 1 zu 2-10 beträgt; und das Oxidationsmittel Perchlorsäure, Salpetersäure, Schwefelsäure, Persulfat, Permanganat, Chlorat, Perchlorat oder eine Mischung von zwei oder mehreren davon ist;
Zugabe eines Aromatisierungskatalysators in die Interkalationsdispersion, **dadurch gekennzeichnet, dass** ein Massenverhältnis des vorbehandelten Anthrazitpulvers zu dem Aromatisierungskatalysator 100 bis 10 beträgt; und AromatisierungskatalysatorKupferchlorid, Eisentrichlorid, Eisenchlorid, Zinkchlorid, Nickelchlorid, Manganchlorid, Molybdäntrioxid, Ammoniummolybdat, Molybdänphosphid, Zinkphosphid oder eine Mischung von zwei oder mehreren davon ist;
Behandlung der Interkalationsdispersion mit dem Ultraschall bei 30-50°C für 0.5-2 Stunden und Zugabe von deionisiertem Wasser, das das gleiche Volumen wie das der Interkalationsdispersion hat, um eine zweite Mischung zu erhalten; Behandlung der zweiten Mischung mit einer konstanten Temperatur von 70-100°C für 1-5min;
Zugabe von Wasserstoffperoxid in die Interkalationsdispersion mit dem deionisiertem Wasser; **dadurch gekennzeichnet, dass** ein Massenverhältnis des Wasserstoffperoxids zu dem vorbehandelten Anthrazitpulver 1:5-20 beträgt; Saugfiltrieren und Waschen der Interkalationsdispersion mit dem deionisiertem Wasser, um eine Anthrazitoxiddispersionzu erhalten;
d. Herstellung einer Graphenoxidkolloidlösung: Behandlung der in Schritt c. erhaltenen Anthrazitoxiddispersion mit einem Ultraschall-Abziehverfahren für 1-5h und mit einer Ultraschallleistung von 100-600W, um eine Graphenoxidkolloidlösung zu erhalten; und
e. Herstellung eines Graphenoxids: Behandlung der Graphenoxid-Kolloidlösung aus Schritt d. mit einem Zentrifugierverfahren mit einer Rotationsgeschwindigkeit von 4000 r/min und einer Zentrifugationszeit von 5 Minuten und Entnahme eines Überstandes der Graphenoxid-Kolloidlösung, um eine Graphenoxidlösung zu erhalten;
Zugabe einer Ammoniumsulfatlösung mit einer Massenkonzentration von 2-5 % Ammoniumsulfat in den Überstand, dann Salzen und Absaugfiltrieren, um einen Filterkuchen zu erhalten, Waschen des Filterkuchens mit deionisiertem Wasser, dann mit Alkohol und Trocknen eines gewaschenen Filterkuchens, um das Graphenoxid zu erhalten.

2. Verfahren nach Anspruch 1, **dadurch gekennzeichnet, dass** das Hydroxid des geschmolzenen Alkalimetalls in Schritt a. mindestens ein Material ausgewählt aus der Gruppe bestehend aus Kaliumhydroxid, Natriumhydroxid und Cäsiumhydroxid umfasst.

3. Verfahren nach Anspruch 1, **dadurch gekennzeichnet, dass** das Dispergiermittel in Schritt b. mindestens ein Material ausgewählt aus der Gruppe bestehend aus, deionisiertem Wasser, Phosphorsäure, konzentrierter Schwefelsäure, konzentrierter Salpetersäure, einer 5%igen wässrigen Lösung von Cetyltrimethylammoniumbromid, einer 5%igen wässrigen Lösung von Tetrabutylammoniumbromid, Glycerin, Ethylenglykol und n-Methyl-2-pyrrolidon umfasst.

4. Verfahren nach Anspruch 1, **dadurch gekennzeichnet, dass** das Voroxidationsmittel in Schritt b. mindestens ein Material ausgewählt aus der Gruppe bestehend aus Ammoniumpersulfat, Kaliumpersulfat, Kaliumnitrat, Phosphorsäureanhydrid und Jodpentoxid umfasst.

5. Verfahren nach Anspruch 1, **dadurch gekennzeichnet, dass** das Interkalationsmittel in Schritt c. mindestens ein Material ausgewählt aus der Gruppe bestehend aus konzentrierter Schwefelsäure, Phosphorsäure, Borsäure, Eisentrichlorid und Natriumborat umfasst.

6. Verfahren nach Anspruch 1, **dadurch gekennzeichnet, dass** das Oxidationsmittel in Schritt c. mindestens ein Material ausgewählt aus der Gruppe bestehend aus Permanganat, Chlorat, rauchender Salpetersäure und Perchlorat umfasst.

7. Verfahren nach Anspruch 1, **dadurch gekennzeichnet, dass** der Aromatisierungskatalysator in Schritt c. mindestens ein Material ausgewählt aus der Gruppe bestehend aus Eisentrichlorid, Nickelchlorid und Molybdäntrioxid umfasst.

8. Verfahren nach Anspruch 1, **dadurch gekennzeichnet, dass** der Trocknungsprozess in Schritt e. darin besteht, den gewaschenen Filterkuchen 2 Stunden lang im Vakuumschrank zu trocknen.

## Revendications

1. Procédé de préparation d'un oxyde de graphène, comprenant :
a. préparation d'une poudre d'anthracite : laver, sécher et broyer les matières premières de l'anthracite, et puis les passer à travers des tamis de 75 µm pour obtenir l'anthracite ;
purifier l'anthracite avec un hydroxyde d'un métal alcalin fondu pour obtenir un anthracite purifié, et laver l'anthracite purifié jusqu'à une valeur de pH atteignant 7-8 pour obtenir un anthracite lavé, et sécher l'anthracite lavé pour obtenir une poudre d'anthracite ;
b. prétraiter la poudre d'anthracite : mettre la poudre d'anthracite obtenue à l'étape a. dans un dispersant et la traiter aux ultrasons pour obtenir un liquide dispersant de 0.1-0.5 g/ml ; **caractérisé en ce que** le dispersant est de l'eau déionisée, un acide inorganique, une solution d'agent tensioactif ou un mélange de deux ou plusieurs d'entre eux ;
mélanger le liquide de dispersion avec un pré oxydant et le traiter avec un environnement à ultrasons ; **caractérisé en ce qu'**un rapport de masse entre la poudre d'anthracite et le pré-oxydant est de 1:0-5; et le pré-oxydant est le nitrate, le dichromate, le persulfate, le permanganate, le peroxyde, l'oxyde de phosphore, l'oxyiodure ou un mélange de deux ou plusieurs d'entre eux ;
filtrer par l'eau le liquide de dispersion avec un pré oxydant, et traiter thermiquement un liquide de dispersion filtré avec un pré oxydant dans des conditions de micro-ondes de 400-900W pendant 5-30 min pour obtenir un premier mélange ; refroidir naturellement, broyer et tamiser le premier mélange pour obtenir une poudre d'anthracite prétraitée ;
c. préparation d'une dispersion d'oxyde d'anthracite : mettre la poudre d'anthracite prétraitée obtenue par l'étape b. dans un agent d'intercalation pour obtenir une dispersion d'intercalation de 0.1-5g/ml ;
**caractérisé en ce que** l'agent d'intercalation est un acide inorganique ;
traiter la dispersion d'intercalation avec les ultrasons à 20°C pendant 0.5-2 heures, et la mélanger avec un agent oxydant ; **caractérisé en ce qu'**un rapport de masse entre l'agent oxydant et la poudre d'anthracite prétraitée est de 1 à 2-10; et l'agent oxydant est l'acide perchlorique, l'acide nitrique, l'acide sulfurique, le persulfate, le permanganate, le chlorate, le perchlorate ou un mélange de deux ou plusieurs d'entre eux ;
ajouter un catalyseur pour l'aromatisation dans la dispersion d'intercalation, **caractérisé en ce qu'**un rapport massique de la poudre d'anthracite prétraitée au catalyseur pour l'aromatisation est de 100 à 10 ; et le catalyseur pour l'aromatisation est le chlorure cuivreux, le trichlorure ferrique, le chlorure ferreux, le chlorure de zinc, le chlorure de nickel, le chlorure de manganèse, le trioxyde de molybdène, le molybdate d'ammonium, le phosphure de molybdène, le phosphure de zinc, ou un mélange de deux ou plusieurs d'entre eux ;
traiter la dispersion d'intercalation avec l'ultrason à 30-50°C pendant 0.5-2 heures, et ajouter de l'eau déionisée ayant un volume identique à celui de la dispersion d'intercalation pour obtenir un second mélange ; traiter le second mélange à une température constante de 70-100°C pendant 1-5min ;
ajouter du peroxyde d'hydrogène dans la dispersion d'intercalation avec l'eau déionisée ; **caractérisé en ce qu'**un rapport de masse du peroxyde d'hydrogène à la poudre d'anthracite prétraitée est de 1:5-20 ; filtrer par aspiration et laver la dispersion d'intercalation avec l'eau déionisée pour obtenir une dispersion d'oxyde d'anthracite ;
d. préparation d'une solution colloïdale d'oxyde de graphène : traiter la dispersion d'oxyde d'anthracite obtenue à l'étape c. avec un procédé de stripping aux ultrasons pendant 1-5h, et avec une puissance ultrasonore de 100-600W, pour obtenir une solution colloïdale d'oxyde de graphène; et
e. préparation d'un oxyde de graphène : traiter la solution colloïdale d'oxyde de graphène de l'étape d. avec un procédé de centrifugation, avec une vitesse de rotation de 4000r/min et un temps de centrifugation de 5min, et prendre un surnageant de la solution colloïdale d'oxyde de graphène pour obtenir une solution d'oxyde de graphène ;
ajouter une solution de sulfate d'ammonium avec une concentration de 2-5 % en masse de sulfate d'ammonium dans le surnageant, et puis le saler et le filtrer par aspiration pour obtenir un gâteau de filtre, laver le gâteau de filtre à l'eau désionisée, puis à l'alcool, et sécher un gâteau de filtre lavé pour obtenir l'oxyde de graphène.

2. Procédé selon la revendication 1, **caractérisé en ce que**, l'hydroxyde du métal alcalin fondu dans l'étape a. comprend au moins un matériau choisi dans le groupe constitué par l'hydroxyde de potassium, l'hydroxyde de sodium et l'hydroxyde de césium.

3. Procédé selon la revendication 1, **caractérisé en ce que**, le dispersant de l'étape b. comprend au moins un matériau choisi dans le groupe constitué par l'eau désionisée, l'acide phosphorique, l'acide sulfurique concentré, l'acide nitrique concentré, une solution aqueuse à 5% de bromure de cétyltriméthylammonium, une solution aqueuse à 5% de bromure de tétrabutylammonium, de la glycérine, de l'éthylène glycol et de la n-méthyl-2-pyrrolidone.

4. Procédé selon la revendication 1, **caractérisé en ce que**, le pré-oxydant de l'étape b. comprend au moins une matière choisie dans le groupe constitué par le persulfate d'ammonium, le persulfate de potassium, le nitrate de potassium, l'anhydride phosphorique et le pentoxyde d'iode.

5. Procédé selon la revendication 1, **caractérisé en ce que**, l'agent d'intercalation de l'étape c. comprend au moins un matériau choisi dans le groupe constitué par l'acide sulfurique concentré, l'acide phosphorique, l'acide borique, le trichlorure ferrique et le borate de sodium.

6. Procédé selon la revendication 1, **caractérisé en ce que**, l'agent oxydant de l'étape c. comprend au moins une matière choisie dans le groupe constitué par le permanganate, le chlorate, l'acide nitrique fumant et le perchlorate.

7. Procédé selon la revendication 1, **caractérisé en ce que**, le catalyseur d'aromatisation de l'étape c. comprend au moins un matériau choisi dans le groupe constitué par le trichlorure ferrique, le chlorure de nickel et le trioxyde de molybdène.

8. Procédé selon la revendication 1, **caractérisé en ce que**, le processus de séchage de l'étape e. consiste à faire sécher le gâteau de filtre lavé dans un four sous vide pendant 2 heures.
